# EUROPÄISCHE PATENTANMELDUNG

(11) **EP 1 413 819 A1**
(43) Veröffentlichungstag der Anmeldung: **28.04.2004**
(21) Anmeldenummer: 03019113.4
(22) Anmeldetag: 23.08.2003
(51) Int. Cl.: F16L 33/207, F16L 13/14

(54) **Schlauchverbindung**

(30) Priorität: 22.10.2002 DE 10249044
(71) Anmelder: ContiTech Schlauch GmbH, 30165 Hannover (DE)
(72) Erfinder: Besche, Anton, 34497 Korbach (DE); Dude, Holger, 34513 Vöhl (DE); Hecker, Rolf, 34513 Waldeck 6 (DE); Koch, Harald, 35110 Frankenau 2 (DE)
(74) Vertreter: Finger, Karsten

(57) **Zusammenfassung**

Die Erfindung betrifft eine Schlauchverbindung (1), insbesondere eine Hochdruckschlauchverbindung, durch die ein Fluid strömt. Ein ring- oder schraubengangförmig gewellter Metallschlauch (2) ist über eine rohrförmige Hülse (3) mit einem rohrförmigen Anschlusselement (4) verbunden. Eine Öffnung der Hülse (3) ist über einen ertsen Hülsenabschnitt (5) am Anschlusselement (4) befestigt. Die gegenüberliegende Öffnung der Hülse (3) ist über einen zweiten Hülsenabschnitt (6) mit dem Metallschlauch (2) verbunden, dergestalt, dass der Metallschlauch (2) mit einem Endabschnitt im zweiten Hülsenabschnitt (6) angeordnet ist, dass vor dem Endabschnitt oder zwischen dem zweiten Hülsenabschnitt (6) und dem Endabschnitt wenigstens ein radial umlaufender Dichtkörper (7) angeordnet ist, und dass der zweite Hülsenabschnitt (6) durch radiale äußere Krafteinwirkung derart verformt ist, dass der Endabschnitt des Metallschlauchs (2) im zweiten Hülsenabschnitt (6) eingeklemmt ist und der Dichtkörper (7) die Fuge zwischen dem Endabschnitt des Metallschlauchs (2) und dem zweiten Hülsenabschnitt (6) sicher gegen das durch die schlauchverbindung (1) strömende Fluid abdichtet.

## Beschreibung

Die Erfindung betrifft eine Schlauchverbindung, insbesondere eine Hochdruckschlauchverbindung.

Aus der DE 197 28 383 A1 ist eine flexible Schlauchleitung für Hochdruckmedien bekannt, die aus einem ring- oder schraubengangförmig gewellten Metallschlauch besteht, mit einem rohrförmigen Anschlusselement verbunden ist und mit einem den Metallschlauch und das Anschlusselement an ihrer Außenseite umgebenden Schutzschlauch aus elastisch nachgiebigem Material versehen ist. Der Schutzschlauch weist dabei im Bereich der endständigen, dem Anschlusselement benachbarten Wellen radial nach innen gerichtete Einformungen auf, die in die Wellentäler der Wellen des Metallschlauches eingreifen.

Derartige Schlauchverbindungen können jedoch bei sehr hohen Drücken undicht werden. Insbesondere die hierbei in axialer Richtung wirkenden großen Zug- und Druckkräfte können zu einem Abplatzen des Metallschlauchs vom Anschlusselement führen, wodurch das durch den Metallschlauch strömende Fluid ungehindert ins Freie strömen kann.

Der Erfindung liegt die Aufgabe zugrunde, eine verbesserte Schlauchverbindung zwischen einem ring- oder schraubengangförmig gewellten Metallschlauch und einem rohrförmigen Anschlusselement zu schaffen, welche auch bei sehr hohen Drücken hält und sicher abdichtet.

Diese Aufgabe wird durch eine Schlauchverbindung mit den Merkmalen des Anspruchs 1 gelöst. Weiterbildungen und vorteilhafte Ausgestaltungen der Erfindung ergeben sich aus den Unteransprüchen.

Die erfindungsgemäße Schlauchverbindung umfasst einen ring- oder schraubengangförmig gewellten Metallschlauch, der über eine rohrförmige Hülse mit einem rohrförmigen Anschlusselement verbunden ist. Eine Öffnung der Hülse ist über einen ersten Hülsenabschnitt am Anschlusselement befestigt. Die gegenüberliegende Öffnung der Hülse ist über einen zweiten Hülsenabschnitt mit dem Metallschlauch verbunden, dergestalt, dass der Metallschlauch mit seinem Endabschnitt im zweiten Hülsenabschnitt angeordnet ist, dass vor dem Endabschnitt oder zwischen dem zweiten Hülsenabschnitt und dem Endabschnitt wenigstens ein radial umlaufender Dichtkörper angeordnet ist, und dass der zweite Hülsenabschnitt durch radiale äußere Krafteinwirkung derart verformt ist, dass der Endabschnitt des Metallschlauchs im zweiten Hülsenabschnitt ausreißsicher eingeklemmt ist und der Dichtkörper die Fuge zwischen dem Endabschnitt des Metallschlauchs und dem zweiten Hülsenabschnitt sicher gegen das durch die Schlauchverbindung strömende Fluid abdichtet.

Eine solche erfindungsgemäße Schlauchverbindung stellt auch bei sehr hohen Drücken eine sichere und absolut fluiddichte Verbindung zwischen dem ring- oder schraubengangförmig gewellten Metallschlauch und dem rohrförmigen Anschlusselement dar. Die Verwendung einer durch radiale äußere Krafteinwirkung verformbaren rohrförmigen Hülse zur Herstellung einer Verbindung zwischen einem ring- oder schraubengangförmig gewellten Metallschlauch und einem rohrförmigen Anschlusselement ist überraschend einfach und besonders kostengünstig. Dabei ist von besonderer Bedeutung, dass der ring- oder schraubengangförmig gewellte Metallschlauch die bei der Verformung des zweiten Hülsenabschnitts auf den Metallschlauch wirkenden Kräfte ohne Beschädigung aufnehmen kann. Dadurch ist es möglich, den zweiten Hülsenabschnitt und damit den Dichtkörper derart zu verformen, dass der Endabschnitt des Metallschlauchs ausreißsicher im zweiten Hülsenabschnitt eingeklemmt ist und der Dichtkörper seine Funktion sehr gut erfüllt.

Das rohrförmige Anschlusselement kann stoff- oder kraftschlüssig am ersten Hülsenabschnitt befestigt sein. Vorzugsweise bestehen sowohl die Hülse als auch das rohrförmige Anschlusselement aus Metall, wobei der erste Hülsenabschnitt vorzugsweise mit dem rohrförmigen Anschlusselement verlötet ist.

Die Oberfläche des ring- oder schraubengangförmig gewellten Metallschlauchs ist in einer Weiterbildung von einer äußeren Schicht bedeckt, die aus einem Elastomer, einem thermoplastischen Elastomer oder einem Thermoplast gebildet ist. Alternativ dazu kann die Oberfläche des Metallschlauchs von einem äußeren Verbund aus wenigstens zwei Schichten bedeckt sein, wobei wenigstens eine der Verbundschichten eine Schicht ist, die aus einem Elastomer, einem thermoplastischen Elastomer oder einem Thermoplast gebildet ist. Als Materialien für die äußere Schicht bzw. für wenigstens eine der Verbundschichten eignen sich besonders Epichlorhydrin-Kautschuk (ECO), chloriertes Polyethylen (CM), chlorsulfonisiertes Polyethylen (CSM), Copolymere aus Ethylen, Methylacrylat und einer dritten Carboxylgruppen-haltigen Komponente (AEM), hydrierter Acrylnitril-Butadien-Kautschuk (HNBR), Polychloropren-Kautschuk (CR), Naturkautschuk (NR) oder Fluorkautschuk (FPM).

Eine Weiterbildung der Erfindung sieht vor, dass zur Aufnahme von Zug- und/oder Druckkräften wenigstens eine der Verbundschichten eine Verstärkungsschicht ist, die vorzugsweise aus einem Geflecht aus Metall-, Kunststoff- oder Textilfasern in spiralisierter, gestrickter oder gewebter Form, oder aus Festigkeitsträgern aus Metall, Kunststoff oder Textilstoff besteht. Als Material für die Verstärkungsschicht wird vorzugsweise Polyamid (PA), insbesondere Aramid, Polyester (PES), Baumwolle, Modal, Stahl oder Edelstahl verwendet.

Vorzugsweise bilden die äußere Schicht oder der äußere Verbund selbst den Dichtkörper, der durch Verformung des zweiten Hülsenabschnitts derart verpresst ist, dass die Fuge zwischen dem zweiten Hülsenabschnitt und dem Endabschnitt des Metallschlauchs sicher abgedichtet ist. Es ist aber auch möglich, dass die äußere Schicht oder der äußere Verbund wenigstens eine radial umlaufende Aussparung umfassen, in die der Dichtkörper eingefügt ist. Vorzugsweise ist die Aussparung direkt an dem die Öffnung aufweisenden Ende des Endabschnitts des Metallschlauchs vorgesehen. Dies hat den Vorteil, dass nicht die äußere Schicht bzw. der äußere Verbund, sondern der Dichtkörper mit dem durch die Schlauchverbindung strömenden Fluid in Kontakt kommt. Der Dichtkörper besteht hierbei vorzugsweise aus einem fluidresistenten Material, das gleichzeitig eine gute Dichtwirkung aufweist.

Eine vorteilhafte Ausgestaltung der Erfindung sieht vor, dass der Dichtkörper zwischen dem zweiten Hülsenabschnitt und der äußeren Schicht bzw. dem äußeren Verbund angeordnet ist, wobei der Dichtkörper stoffschlüssig mit der äußeren Schicht bzw. dem äußeren Verbund verbindbar ist. Zweckmäßig ist die äußere Schicht bzw. der äußere Verbund fluiddicht mit dem Metallschlauch verklebt, verschweißt oder verlötet, wodurch eine vorteilhafte Dichtwirkung erzielt wird.

In einer Weiterbildung sind die äußere Schicht oder der äußere Verbund mit radial umlaufenden nach innen gerichteten Einformungen versehen, die in die Wellentäler der Wellen des Metallschlauches eingreifen. Hierdurch werden die in axialer Richtung wirkenden Zug- und Druckkräfte besonders gut aufgenommen und die Gefahr eines Abplatzens des Metallschlauchs vom rohrförmigen Anschlusselement weiter gesenkt. Vorzugsweise ist der Dichtkörper durch die Verformung des zweiten Hülsenabschnitts selbst derart verformt, dass er in die Wellentäler der Wellen des Metallschlauchs eingreift. Auch hierdurch ergibt sich eine verbesserte Dichtwirkung gegenüber dem durch die Schlauchverbindung strömenden Fluid.

Eine vorteilhafte Ausgestaltung der Erfindung sieht vor, dass der Dichtkörper aus einem Material besteht, das gegenüber dem durch die Schlauchverbindung strömenden Fluid beständig ist. Folgende Materialien haben sich als Dichtkörper für folgende Fluide besonders bewehrt: Fluorkautschuk (FPM) oder ein Fluorthermoplast (TFP) für Kraftstoffe, Acrylnitril-Butadien-Kautschuk (NBR) oder Polyamid (PA) für Kältemittel, Polytetrafluorethylen (PTFE) für hochtemperierte Fluide, Ethylen/Propylen-Dien-Terpolymere (EPDM) für Wasser, Bremsflüssigkeit und Säfte, Naturkautschuk (NR) für flüssige Lebensmittel wie Milch, Butylkautschuk (IIR) für Säfte. Der Dichtkörper kann als O-Ring, Quad-Ring, Viereck-Ring oder dergleichen ausgebildet sein.

Es ist zweckmäßig, dass innerhalb des Endabschnitts des Metallschlauchs wenigstens teilweise ein rohrförmiger Stützring angeordnet ist. Der rohrförmige Stützring dient dazu, die auf den Endabschnitt des Metallschlauchs bei der Verformung des zweiten Hülsenabschnitts radial einwirkenden Kräfte mit aufzunehmen. Hierdurch ist eine stärkere Verformung des zweiten Hülsenabschnitts ohne Beschädigung des Metallschlauchs möglich. Die stärkere Verformung führt dazu, dass der Dichtkörper am Metallschlauch noch stärker verpresst werden kann, wodurch sich die Dichtwirkung gegenüber dem durch die Schlauchverbindung strömenden Fluid weiter erhöht.

Eine Weiterbildung sieht vor, dass wenigstens ein Teil des zweiten Hülsenabschnitts und wenigstens ein Teil des außerhalb des zweiten Hülsenabschnitts angeordneten Metallschlauchs mit einer gemeinsamen Schicht, vorzugsweise in Form eines Schrumpfschlauchs, bedeckt sind. Dieser erfüllt zwei zusätzliche erfindungswesentliche Funktionen: Einerseits nimmt der Schrumpfschlauch die zwischen der Hülse und dem Metallschlauch in axialer Richtung wirkenden Druck- und Zugkräfte auf, so dass der Metallschlauch ausreißsicher im zweiten Hülsenabschnitt fixiert wird. Andererseits dichtet der Schrumpfschlauch aber auch die Schlauchverbindung zusätzlich ab.

Weiterhin ist vorgesehen, dass der zweite Hülsenabschnitt derart verformt ist, dass der unmittelbar an den zweiten Hülsenabschnitt angrenzende Dichtkörper und/oder die unmittelbar an den zweiten Hülsenabschnitt angrenzende äußere Schicht und/oder der unmittelbar an den zweiten Hülsenabschnitt angrenzende äußere Verbund wenigstens einen radial nach außen gerichteten Vorsprung aufweisen, der in radialer Richtung und wenigstens auf seiner vom Anschlusselement weiter entfernt liegenden Seite von einem Abschnitt des Hülsenabschnitts hintergriffen ist. Dadurch wird eine zusätzliche Ausreißsicherung geschaffen.

Außerdem ist vorgesehen, dass wenigstens ein Teil des zweiten Hülsenabschnitts und wenigstens ein Teil des außerhalb des zweiten Hülsenabschnitts angeordneten Metallschlauchs mit einer gemeinsamen Schicht bzw. einem Schichtenverbund bedeckt sind, und dass auf dieser Schicht bzw. diesem Schichtenverbund im Bereich des zweiten Hülsenabschnitts eine weitere rohrförmige Hülse angeordnet ist, die durch radiale äußere Krafteinwirkung derart verformt ist, dass der Endabschnitt des Metallschlauchs ausreißsicher und fluiddicht eingeklemmt ist.

Eine derartige erfindungsgemäße Anordnung stellt eine zuverlässige Schlauchverbindung dar, die sicher hält und absolut fluiddicht ist. Dabei bildet der vor dem Endabschnitt des Metallschlauchs bzw. zwischen dem zweiten Hülsenabschnitt und dem Endabschnitt des Metallschlauchs angeordnete Dichtkörper in erster Linie und die gemeinsame Schicht bzw. der gemeinsame Schichtenverbund in zweiter Linie jeweils eine Dichtung. Die Verwendung von zwei durch radiale äußere Krafteinwirkung verformbaren Hülsen schafft eine erhöhte Sicherheit gegen das Ausreißen des Metallschlauchs aus der Hülse. Sollte die Oberfläche des Metallschlauchs mit einer äußeren Schicht bzw. einem äußeren Verbund bedeckt sein, sind diese vorzugsweise außerhalb des zweiten Hülsenabschnitts mit der gemeinsamen Schicht zur Aufnahme axialer Zug- und Druckkräfte verbunden.

In einer Weiterbildung der Erfindung ist die weitere rohrförmige Hülse derart verformt, dass die unmittelbar an die Hülse angrenzende gemeinsame Schicht oder der unmittelbar an die Hülse angrenzende Schichtenverbund wenigstens einen radial nach außen gerichteten Vorsprung aufweisen, der in radialer Richtung und auf wenigstens seiner vom Anschlusselement weiter entfernt liegenden Seite von einem Abschnitt der Hülse hintergriffen ist. Dadurch wird eine zusätzliche Sicherheit gegen das Ausreißen des Metallschlauchs aus der Hülse geschaffen.

Die gemeinsame Schicht bzw. die Verbundschichten sind vorzugsweise aus einem Elastomer, einem thermoplastischen Elastomer oder einem Thermoplast gebildet. Als Materialien eignen sich besonders Epichlorhydrin-Kautschuk (ECO), chloriertes Polyethylen (CM), chlorsulfonisiertes Polyethylen (CSM), Copolymere aus Ethylen, Methylacrylat und einer dritten Carboxylgruppen-haltigen Komponente (AEM), hydrierter Acrylnitril-Butadien-Kautschuk (HNBR), Polychloropren-Kautschuk (CR), Naturkautschuk (NR) oder Fluorkautschuk (FPM). Selbstverständlich kann wenigstens eine der Verbundschichten auch eine Verstärkungsschicht sein, die vorzugsweise aus einem Geflecht aus Metall-, Kunststoff- oder Textilfasern in spiralisierter, gestrickter oder gewebter Form, oder aus Festigkeitsträgern aus Metall, Kunststoff oder Textilstoff besteht. Als Material für die Verstärkungsschicht wird auch hier vorzugsweise Polyamid (PA), insbesondere Aramid, Polyester (PES), Baumwolle, Modal, Stahl oder Edelstahl verwendet.

Die weitere rohrförmige Hülse ist vorzugsweise mit der gemeinsamen Schicht bzw. dem gemeinsamen Schichtenverbund verklebt, verschweißt oder verlötet.

Es hat sich als eine vorteilhafte Ausgestaltung der Erfindung herausgestellt, dass anstelle des ring- oder schraubengangförmig gewellten Metallschlauchs jeder andere vorzugsweise ring- oder schraubengangförmig gewellte Schlauch verwendbar ist, der so stabil ausgebildet ist, dass er die bei der Verformung des zweiten Hülsenabschnitts auf den Schlauch wirkenden Kräfte ohne Beschädigung aufnehmen kann.

Nachfolgend wird die Erfindung anhand von Ausführungsbeispielen erläutert, die in der Zeichnung dargestellt sind. In dieser zeigen:
- Fig. 1: eine schematische Darstellung einer Schlauchverbindung im Querschnitt mit verformter Hülse
- Fig. 2: eine schematische Darstellung einer Schlauchverbindung im Querschnitt mit verformter Hülse
- Fig. 3: eine schematische Darstellung einer Schlauchverbindung im Querschnitt mit noch nicht verformter Hülse
- Fig. 4: eine schematische Darstellung einer Schlauchverbindung im Querschnitt mit noch nicht verformter Hülse
- Fig. 5: eine schematische Darstellung einer Schlauchverbindung im Querschnitt mit noch nicht verformter Hülse
- Fig. 6: eine schematische Darstellung einer Schlauchverbindung im Querschnitt mit noch nicht verformter Hülse
- Fig. 7: eine schematische Darstellung einer Schlauchverbindung im Querschnitt mit noch nicht verformter Hülse
- Fig. 8: eine schematische Darstellung einer Schlauchverbindung im Querschnitt mit noch nicht verformter Hülse
- Fig. 9: eine schematische Darstellung einer Schlauchverbindung im Querschnitt mit noch nicht verformter Hülse

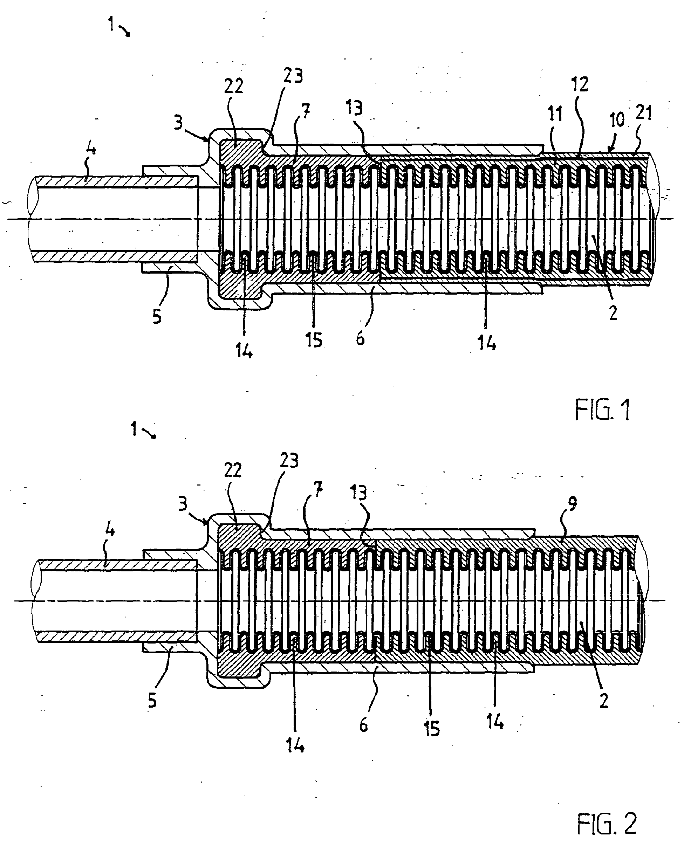

Die in Fig. 1. dargestellte Hochdruckschlauchverbindung 1 besteht aus einem ringgangförmig gewellten Metallschlauch 2, der über eine rohrförmige Hülse 3 mit einem rohrförmigen Anschlusselement 4 verbunden ist, wobei eine Öffnung der Hülse 3 über einen ersten Hülsenabschnitt 5 am Anschlusselement 4 befestigt ist und die gegenüberliegende Öffnung der Hülse 3 über einen zweiten Hülsenabschnitt 6 mit dem Metallschlauch 2 verbunden ist.

Die Oberfläche des Metallschlauchs 2 ist von einem äußeren Verbund 10 aus drei Schichten 11, 12 und 21 bedeckt. Während die Verbundschichten 11 und 21 aus einem Elastomer, vorzugsweise aus Kautschuk bestehen, handelt es sich bei der Verbundschicht 12 um eine Verstärkungsschicht, die aus Aramid-Festigkeitsträgern besteht und der Aufnahme von Zug- und/oder Druckkräften dient. Die Schicht 11 des äußeren Verbundes 10 weist radial umlaufende nach innen gerichtete Einformungen 14 auf, die in die Wellentäler 15 der Wellen des Metallschlauchs 2 eingreifen.

Der äußere Verbund 10 weist außerdem eine radial umlaufende Aussparung 13 am Ende des in den zweiten Hülsenabschnitt 6 eingesteckten Metallschlauchs 2 auf, in die ein Dichtkörper 7 eingefügt ist.

Der zweite Hülsenabschnitt 6 ist hierbei durch radiale äußere Krafteinwirkung derart verformt ist, dass der Endabschnitt des Metallschlauchs 2 im zweiten Hülsenabschnitt 6 ausreißsicher eingeklemmt ist und der Dichtkörper 7 die Fuge zwischen dem Endabschnitt des Metallschlauchs 2 und dem zweiten Hülsenabschnitt 6 sicher gegen das durch die Schlauchverbindung 1 strömende Fluid abdichtet.

Durch die Verformung des zweiten Hülsenabschnitts 6 ist der Dichtkörper 7 selbst derart verformt, dass er in die Wellentäler 15 der Wellen des Metallschlauchs 2 eingreift. Außerdem weist der unmittelbar an den zweiten Hülsenabschnitt 6 angrenzende Dichtkörper 7 einen radial nach außen gerichteten Vorsprung 22 auf, der in radialer Richtung und wenigstens auf seiner vom Anschlusselement 4 weiter entfernt liegenden Seite von einem Abschnitt 23 des Hülsenabschnitts 6 hintergriffen ist. Hierdurch wird eine sehr gute Ausreißsicherung geschaffen.

Die in Fig. 2 dargestellte Schlauchverbindung 1 unterscheidet sich von der in Fig. 1 dargestellten Schlauchverbindung 1 dadurch, dass die Oberfläche des Metallschlauchs 2 nicht von einem äußeren Verbund 10 aus drei Schichten 11, 12 und 21 bedeckt ist, sondern nur von einer äußeren Schicht 9. Die äußere Schicht 9 ist aber auch mit radial umlaufenden nach innen gerichteten Einformungen 14 versehen, die in die Wellentäler 15 der Wellen des Metallschlauches 2 eingreifen.

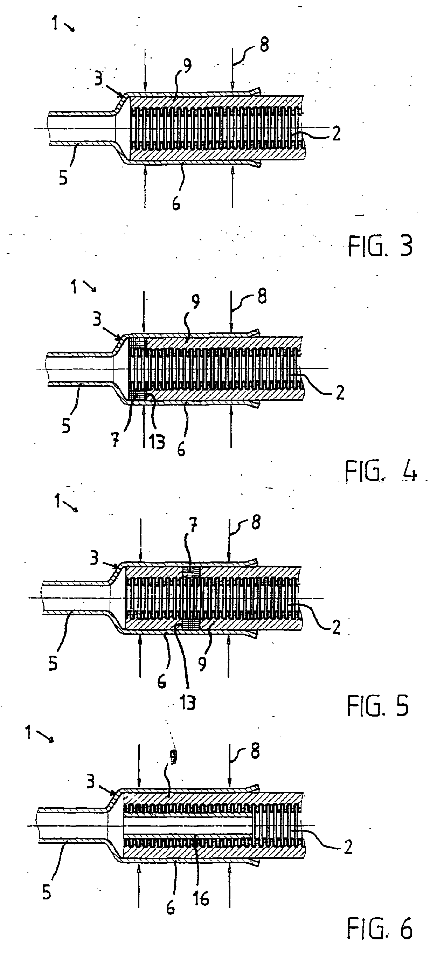

In Fig. 3 ist eine weitere Ausführungsform der erfindungsgemäßen Schlauchverbindung 1 mit einem ringgangförmig gewellten Metallschlauch 2 dargestellt, der über eine rohrförmige Hülse 3 mit einem hier nicht dargestellten rohrförmigen Anschlusselement verbunden ist. Die in Fig. 3 auf der linken Seite angeordnete Öffnung der Hülse 3 ist über einen ersten Hülsenabschnitt 5 am Anschlusselement befestigt. In der gegenüberliegenden Öffnung der Hülse 3 ist entlang eines zweiten Hülsenabschnitts 6 der Endabschnitt des Metallschlauchs 2 angeordnet. Die Oberfläche des Metallschlauchs 2 ist von einer äußeren Schicht 9 aus einem Elastomer bedeckt, wobei die Schicht 9 radial umlaufende nach innen gerichtete Einformungen aufweist, die in die Wellentäler der Wellen des Metallschlauchs 2 eingreifen. Die äußere Schicht 9 stellt hierbei selbst den Dichtkörper dar.

Im Unterschied zu den in Fig. 1 und 2 dargestellten Schlauchverbindungen 1 ist der zweite Hülsenabschnitt 6 noch nicht durch eine radiale äußere Krafteinwirkung verformt. Durch die Pfeile 8 wird jedoch ein radial umlaufender Bereich der Hülse 3 begrenzt, in dem die radiale äußere Krafteinwirkung zur Bildung der erfindungsgemäßen Schlauchverbindung erfolgt. Nach erfolgter Verpressung des zweiten Hülsenabschnitts 6 ist dieser derart verformt, dass der Endabschnitt des Metallschlauchs 2 im zweiten Hülsenabschnitt 6 ausreißsicher eingeklemmt ist und die äußere Schicht 9 die Fuge zwischen dem Endabschnitt des Metallschlauchs 2 und dem zweiten Hülsenabschnitt 6 sicher gegen das durch die Schlauchverbindung 1 strömende Fluid abdichtet. Hierbei fungiert der äußere Schlauch 9 selbst als Dichtkörper.

Die in Fig. 4 dargestellte Ausführungsform der erfindungsgemäßen Schlauchverbindung 1 unterscheidet sich von der in Fig. 3 dargestellten Schlauchverbindung 1 dadurch, dass die äußere Schicht 9 eine radial umlaufende Aussparung 13 aufweist, in die ein Dichtkörper 7 in Form eines radial umlaufenden Rings mit viereckigem Querschnitt eingefügt ist. Die Aussparung 13 ist am Ende des in den zweiten Hülsenabschnitt 6 eingesteckten Metallschlauchs 2 angeordnet. Da bei dieser Anordnung nur der Dichtkörper 7, nicht aber die äußere Schicht 9 direkt mit dem Fluid in Kontakt kommt, ist es möglich, den Dichtkörper aus einem speziellen Material herzustellen, das gegenüber dem Fluid beständig ist.

Dagegen ist bei der in Fig. 5 dargestellten Ausführungsform der erfindungsgemäßen Schlauchverbindung 1 die radial umlaufende Aussparung 13 etwa in Höhe der Mitte des zweiten Hülsenabschnitts 6 angeordnet. Der in die Aussparung 13 eingefügte Dichtkörper 7 hat wiederum die Form eines radial umlaufenden Rings mit viereckigem Querschnitt. Vorteilhaft an dieser Anordnung ist, dass nach erfolgter radialer Verpressung des zweiten Hülsenabschnitts 6 eine sehr gute Dichtwirkung gegenüber dem durch die Schlauchverbindung 1 strömenden Fluid erreicht wird.

Die in Fig. 6 dargestellte Ausführungsform der erfindungsgemäßen Schlauchverbindung 1 unterscheidet sich von der in Fig. 3 dargestellten Schlauchverbindung 1 dadurch, dass innerhalb des Endabschnitts des Metallschlauchs 2 ein rohrförmiger Stützring 16 angeordnet ist. Der rohrförmige Stützring 16 dient dazu, den Endabschnitt des Metallschlauchs 2 bei der Aufnahme der bei der Verformung des zweiten Hülsenabschnitts 6 auftretenden radial auf den Metallschlauch 2 einwirkenden Kräfte zu unterstützen. Hierdurch ist ohne Beschädigung des Metallschlauchs eine stärkere Verformung des zweiten Hülsenabschnitts möglich. Die stärkere Verformung führt dazu, dass die als Dichtkörper fungierende äußere Schicht 9 des Metallschlauchs 2 noch stärker verpresst wird, wodurch sich die Dichtwirkung der Schicht 9 gegenüber dem durch die Schlauchverbindung 1 strömenden Fluid weiter erhöht.

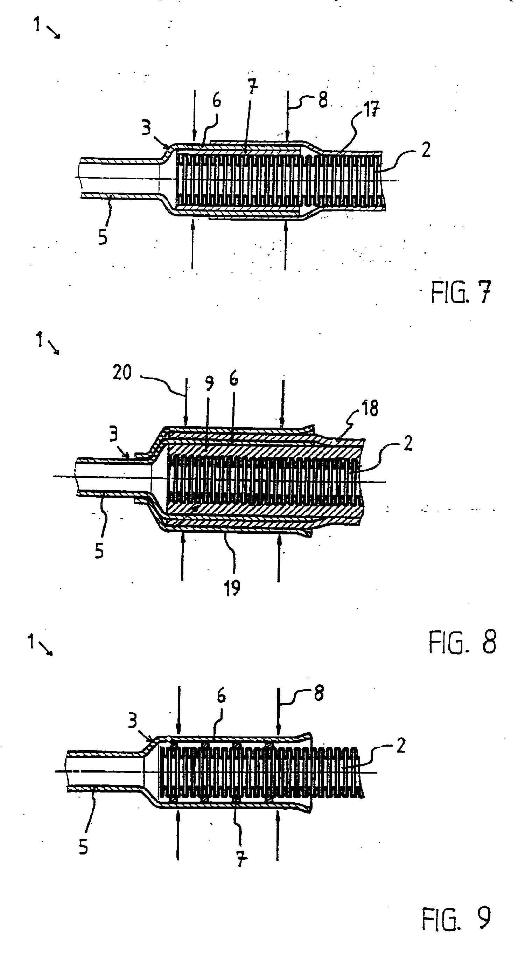

In Fig. 7 ist eine weitere Ausführungsform der erfindungsgemäßen Schlauchverbindung 1 mit einem ringgangförmig gewellten Metallschlauch 2 dargestellt, der über eine rohrförmige Hülse 3 mit einem hier nicht dargestellten rohrförmigen Anschlusselement verbunden ist. Die in Fig. 7 auf der linken Seite angeordnete Öffnung der Hülse 3 ist über einen ersten Hülsenabschnitt 5 am Anschlusselement befestigt. In der gegenüberliegenden Öffnung der Hülse 3 ist entlang eines zweiten Hülsenabschnitts 6 der Endabschnitt des Metallschlauchs 2 angeordnet. Zwischen dem zweiten Hülsenabschnitt 6 und dem Endabschnitt des Metallschlauchs 2 ist ein radial umlaufender Dichtkörper 7 in Form eines auf den Endabschnitt des Metallschlauchs 2 aufgezogenen Elastomerschlauchs angeordnet. Ein Teil des zweiten Hülsenabschnitts 6 und der außerhalb des zweiten Hülsenabschnitts 6 angeordnete Metallschlauch 2 sind erfindungsgemäß mit einem gemeinsamen Schrumpfschlauch 17 bedeckt.

Wie bei den in Fig. 3 bis 6 dargestellten Hülsenabschnitten 6 ist auch der in Fig. 7 dargestellte zweite Hülsenabschnitt 6 noch nicht durch radiale äußere Krafteinwirkung verformt. Durch die Pfeile 8 wird jedoch ein radial umlaufender Bereich begrenzt, in dem die radiale äußere Krafteinwirkung zur Bildung der erfindungsgemäßen Schlauchverbindung 1 erfolgt. Nach erfolgter Verpressung des zweiten Hülsenabschnitts 6 ist dieser derart verformt, dass der Endabschnitt des Metallschlauchs 2 im zweiten Hülsenabschnitt 6 ausreißsicher eingeklemmt ist und der Dichtkörper 7 die Fuge zwischen dem Endabschnitt des Metallschlauchs 2 und dem zweiten Hülsenabschnitt 6 sicher gegen das durch die Schlauchverbindung 1 strömende Fluid abdichtet. Der Schrumpfschlauch 17 bildet hierbei ein zusätzliches Verbindungselement zwischen dem Metallschlauch 2 und dem zweiten Hülsenabschnitt 6. Einerseits weist dieses zusätzliche Verbindungselement eine weitere Dichtwirkung gegenüber dem durch die Schlauchverbindung 1 strömenden Fluid auf. Andererseits wird durch das zusätzliche Verbindungselement eine weitere Sicherung gegen das Ausreißen des Metallschlauchs 2 aus dem zweiten Hülsenabschnitt 6 geschaffen, wobei der Schrumpfschlauch nach Verformung des Hülsenabschnitts 6 Zug- und Druckkräfte in axialer Richtung aufnimmt.

In Fig. 8 ist eine weitere Ausführungsform der erfindungsgemäßen Schlauchverbindung 1 mit einem ringgangförmig gewellten Metallschlauch 2 dargestellt, der über eine rohrförmige Hülse 3 mit einem hier nicht dargestellten rohrförmigen Anschlusselement verbunden ist. Die in Fig. 7 auf der linken Seite angeordnete Öffnung der Hülse 3 ist über einen ersten Hülsenabschnitt 5 am Anschlusselement befestigt. In der gegenüberliegenden Öffnung der Hülse 3 ist entlang eines zweiten Hülsenabschnitts 6 der Endabschnitt des Metallschlauchs 2 angeordnet. Die Oberfläche des Metallschlauchs 2 ist von einer äußeren Schicht 9 aus einem Elastomer bedeckt, wobei die Schicht 9 radial umlaufende nach innen gerichtete Einformungen aufweist, die in die Wellentäler der Wellen des Metallschlauchs 2 eingreifen. Die äußere Schicht 9 stellt hierbei selbst den Dichtkörper dar.

Der zweiten Hülsenabschnitts 6 und der außerhalb des zweiten Hülsenabschnitts 6 angeordnete mit einer äußeren Schicht 9 überzogene Metallschlauch 2 sind mit einer gemeinsamen Schicht 18 aus einem Elastomer bedeckt. Auf dieser gemeinsamen Schicht 18 ist im Bereich des zweiten Hülsenabschnitts 6 eine weitere rohrförmige Hülse 19 angeordnet.

Erfindungsgemäß ist diese weiter rohrförmige Hülse 19 durch radiale äußere Krafteinwirkung 20 derart verformt, dass der Endabschnitt des Metallschlauchs 2 ausreißsicher und fluiddicht im zweiten Hülsenabschnitt eingeklemmt ist. In Fig. 8 ist die Schlauchverbindung 1 jedoch noch vor der Verformung der rohrförmigen Hülse 19 dargestellt. Durch die Pfeile 20 wird aber ein radial umlaufender Bereich begrenzt, in dem die radiale äußere Krafteinwirkung zur Bildung der erfindungsgemäßen Schlauchverbindung 1 erfolgt. Durch radiale äußere Krafteinwirkung 20 auf die weitere rohrförmige Hülse 19 wird die gemeinsamen Schicht 18 zusammengedrückt. Durch diese Verformung wirken auf den zweiten Hülsenabschnitt 6 der Hülse 3 radial äußere Kräfte ein, die ebenfalls dazu führen, dass der zweite Hülsenabschnitt 6 verformt und die äußere Schicht 9 zusammengedrückt wird. Hierbei wird der Endabschnitt des Metallschlauchs 2 ausreißsicher in dem zweiten Hülsenabschnitt 6 eingeklemmt.

Eine derartige erfindungsgemäße Anordnung stellt eine zuverlässige Schlauchverbindung dar, die sicher zusammenhält und absolut fluiddicht ist.

Dabei bilden die äußere Schicht 9 in erster Linie und die gemeinsame Schicht 18 in zweiter Linie jeweils einen Dichtkörper gegen das durch die Schlauchverbindung 1 strömende Fluid. Die Verwendung von zwei durch radiale äußere Krafteinwirkung verformbaren Hülsen 3 und 19 schafft eine erhöhte Sicherheit gegen das Ausreißen des Metallschlauchs 2 aus der Hülse 3.

Die äußere Schicht 9 des Metallschlauchs 2 ist außerhalb des zweiten Hülsenabschnitts 6 mit der gemeinsamen Schicht 18 zur Aufnahme axialer Zug- und Druckkräfte vorzugsweise fest verbunden.

Die in Fig. 9 dargestellte Ausführungsform der erfindungsgemäßen Schlauchverbindung 1 unterscheidet sich von der in Fig. 3 dargestellten Schlauchverbindung 1 dadurch, dass der Endabschnitt des Metallschlauchs nicht durch eine äußere radial umlaufende Schicht 9 als Dichtkörper bedeckt ist, sondern vier einzelne Dichtkörper 7 in Form radial um den Endabschnitt des Metallschlauchs 2 laufender O-Ringe aufweist, die jeweils voneinander beabstandet entlang des Endabschnitts angeordnet sind.

### Bezugszeichenliste

### (ist Bestandteil der Beschreibung)

- 1: Schlauchverbindung
- 2: Metallschlauch
- 3: Hülse
- 4: Anschlusselement
- 5: erster Hülsenabschnitt
- 6: zweiter Hülsenabschnitt
- 7: Dichtkörper
- 8: radiale äußere Krafteinwirkung
- 9: äußere Schicht
- 10: äußerer Verbund
- 11: Schicht des äußeren Verbundes
- 12: Verstärkungsschicht des Verbundes
- 13: Aussparung
- 14: Einformung
- 15: Wellental
- 16: Stützring
- 17: Schrumpfschlauch
- 18: gemeinsame Schicht
- 19: weitere Hülse
- 20: radiale äußere Krafteinwirkung
- 21: Schicht des äußeren Verbundes
- 22: Vorsprung
- 23: Abschnitt des zweiten Hülsenabschnitts

## Patentansprüche

1. Schlauchverbindung (1), insbesondere Hochdruckschlauchverbindung, durch die ein Fluid strömt, aus einem ring- oder schraubengangförmig gewellten Metallschlauch (2), der über eine rohrförmige Hülse (3) mit einem rohrförmigen Anschlusselement (4) verbunden ist, wobei eine Öffnung der Hülse (3) über einen ersten Hülsenabschnitt (5) am Anschlusselement (4) befestigt ist und die gegenüberliegende Öffnung der Hülse (3) über einen zweiten Hülsenabschnitt (6) mit dem Metallschlauch (2) verbunden ist, dergestalt, dass der Metallschlauch (2) mit einem Endabschnitt im zweiten Hülsenabschnitt (6) angeordnet ist, dass vor dem Endabschnitt oder zwischen dem zweiten Hülsenabschnitt (6) und dem Endabschnitt wenigstens ein radial umlaufender Dichtkörper (7) angeordnet ist, und dass der zweite Hülsenabschnitt (6) durch radiale äußere Krafteinwirkung (8) derart verformt ist, dass der Endabschnitt des Metallschlauchs (2) im zweiten Hülsenabschnitt (6) ausreißsicher eingeklemmt ist und der Dichtkörper (7) die Fuge zwischen dem Endabschnitt des Metallschlauchs (2) und dem zweiten Hülsenabschnitt (6) sicher gegen das durch die Schlauchverbindung (1) strömende Fluid abdichtet.

2. Schlauchverbindung (1) nach Anspruch 1, **dadurch gekennzeichnet, dass** das rohrförmige Anschlusselement (4) stoff- oder kraftschlüssig am ersten Hülsenabschnitt (5) befestigt ist.

3. Schlauchverbindung (1) nach Anspruch 1 oder 2, **dadurch gekennzeichnet, dass** die Oberfläche des Metallschlauchs (2) von einer äußeren Schicht (9) bedeckt ist, die aus einem Elastomer, einem thermoplastischen Elastomer oder einem Thermoplast gebildet ist.

4. Schlauchverbindung (1) nach Anspruch 1 oder 2, **dadurch gekennzeichnet, dass** die Oberfläche des Metallschlauchs (2) von einem äußeren Verbund (10) aus wenigstens zwei Schichten (11, 12) bedeckt ist, wobei wenigstens eine der Verbundschichten (11, 12) eine Schicht (11) ist, die aus einem Elastomer, einem thermoplastischen Elastomer oder einem Thermoplast gebildet ist.

5. Schlauchverbindung (1) nach Anspruch 4, **dadurch gekennzeichnet, dass** zur Aufnahme von Zug- und/oder Druckkräften wenigstens eine der Verbundschichten (11, 12) eine Verstärkungsschicht (12) ist, die vorzugsweise aus einem Geflecht aus Metall-, Kunststoff- oder Textilfasern in spiralisierter, gestrickter oder gewebter Form, oder aus Festigkeitsträgern aus Metall, Kunststoff oder Textilmaterialien besteht.

6. Schlauchverbindung (1) nach einem der Ansprüche 3 bis 5, **dadurch gekennzeichnet, dass** die Schicht (9) oder der Verbund (10) selbst den Dichtkörper (7) bilden.

7. Schlauchverbindung (1) nach einem der Ansprüche 3 bis 6, **dadurch gekennzeichnet, dass** die Schicht (9) oder der Verbund (10) wenigstens eine radial umlaufende Aussparung (13) umfassen, in die der Dichtkörper (7) eingefügt ist.

8. Schlauchverbindung (1) nach Anspruch 7, **dadurch gekennzeichnet, dass** die Aussparung (13) direkt an dem die Öffnung aufweisenden Ende des Endabschnitts des Metallschlauchs (2) vorgesehen ist.

9. Schlauchverbindung (1) nach einem der Ansprüche 3 bis 8, **dadurch gekennzeichnet, dass** der Dichtkörper (7) zwischen dem zweiten Hülsenabschnitt (6) und der äußeren Schicht (9) bzw. dem äußeren Verbund (10) angeordnet, ist, wobei der Dichtkörper (7) stoffschlüssig mit der äußeren Schicht (9) bzw. dem äußeren Verbund (10) verbindbar ist..

10. Schlauchverbindung (1) nach einem der Ansprüche 3 bis 9, **dadurch gekennzeichnet, dass** die äußere Schicht (9) oder der äußere Verbund (10) fluiddicht mit dem Metallschlauch (2) verbunden, insbesondere verklebt oder verschweißt sind.

11. Schlauchverbindung (1) nach einem der Ansprüche 3 bis 10, **dadurch gekennzeichnet, dass** die äußere Schicht (9) oder der äußere Verbund (10) mit radial umlaufenden nach innen gerichteten Einformungen (14) versehen ist, die in die Wellentäler (15) der Wellen des Metallschlauches (2) eingreifen.

12. Schlauchverbindung (1) nach einem der Ansprüche 1 bis 11, **dadurch gekennzeichnet, dass** der Dichtkörper (7) durch die Verformung des zweiten Hülsenabschnitts (6) selbst derart verformt ist, dass er in die Wellentäler (15) der Wellen des Metallschlauchs (2) eingreift.

13. Schlauchverbindung (1) nach einem der Ansprüche 1 bis 12, **dadurch gekennzeichnet, dass** der Dichtkörper (7) aus einem Material besteht, das gegenüber dem durch die Schlauchverbindung (1) strömenden Fluid beständig ist.

14. Schlauchverbindung (1) nach einem der Ansprüche 1 bis 13, **dadurch gekennzeichnet, dass** der Dichtkörper (7) als O-Ring, Quad-Ring, Viereck-Ring oder dergleichen ausgebildet ist.

15. Schlauchverbindung (1) nach einem der Ansprüche 1 bis 14, **dadurch gekennzeichnet, dass** innerhalb des Endabschnitts des Metallschlauchs (2) wenigstens teilweise ein rohrförmiger Stützring (16) angeordnet ist.

16. Schlauchverbindung (1) nach einem der Ansprüche 1 bis 15, **dadurch gekennzeichnet, dass** wenigstens ein Teil des zweiten Hülsenabschnitts (6) und wenigstens ein Teil des außerhalb des zweiten Hülsenabschnitts (6) angeordneten Metallschlauchs (2) mit einem gemeinsamen Schrumpfschlauch (17) bedeckt sind.

17. Schlauchverbindung (1) nach einem der Ansprüche 4 bis 16, **dadurch gekennzeichnet, dass** der zweite Hülsenabschnitt (6) derart verformt ist, dass der unmittelbar an den zweiten Hülsenabschnitt (6) angrenzende Dichtkörper (7) und/oder die unmittelbar an den zweiten Hülsenabschnitt (6) angrenzende äußere Schicht (9) und/oder der unmittelbar an den zweiten Hülsenabschnitt (6) angrenzende äußere Verbund (10) wenigstens einen radial nach außen gerichteten Vorsprung aufweist, der in radialer Richtung und wenigstens auf seiner vom Anschlusselement weiter entfernt liegenden Seite von einem Abschnitt des Hülsenabschnitts (6) hintergriffen ist.

18. Schlauchverbindung (1) nach einem der Ansprüche 1 bis 16, **dadurch gekennzeichnet, dass** wenigstens ein Teil des zweiten Hülsenabschnitts (6) und wenigstens ein Teil des außerhalb des zweiten Hülsenabschnitts (6) angeordneten Metallschlauchs (6) mit einer gemeinsamen Schicht (18) bzw. einem Schichtenverbund bedeckt sind, und dass auf dieser Schicht (18) bzw. diesem Schichtenverbund im Bereich des zweiten Hülsenabschnitts (6) eine weitere rohrförmige Hülse (19) angeordnet ist, die durch radiale äußere Krafteinwirkung (20) derart verformt ist, dass der Endabschnitt des Metallschlauchs (2) ausreißsicher und fluiddicht eingeklemmt ist.

19. Schlauchverbindung (1) nach der Anspruch 18, **dadurch gekennzeichnet, dass** die weiter rohrförmige Hülse (19) derart verformt ist, dass die unmittelbar an die Hülse (19) angrenzende gemeinsame Schicht (18) oder der unmittelbar an die Hülse (19) angrenzende Schichtenverbund wenigstens einen radial nach außen gerichteten Vorsprung aufweist, der der in radialer Richtung und wenigstens auf seiner vom Anschlusselement weiter entfernt liegenden Seite von einem Abschnitt der Hülse (19) hintergriffen ist.

20. Schlauchverbindung (1) nach Anspruch 18 oder 19, **dadurch gekennzeichnet, dass** die weitere rohrförmige Hülse (19) an der gemeinsamen Schicht (18) bzw. dem gemeinsamen Schichtenverbund angeschweißt oder angelötet ist.

21. Schlauchverbindung (1) nach einem der Ansprüche 1 bis 20, **dadurch gekennzeichnet, dass** anstelle des ring- oder schraubengangförmig gewellten Metallschlauchs (2) jeder andere Schlauch verwendbar ist, der so stabil ausgebildet ist, dass er die bei der Verformung des zweiten Hülsenabschnitts (6) auf den Schlauch wirkenden Kräfte ohne Beschädigung aufnehmen kann.
